# EUROPEAN PATENT APPLICATION

(11) **EP 4 841 229 A1**
(43) Date of publication of application: **18.11.2026**
(21) Application number: 24930749.7
(22) Date of filing: 18.09.2024
(51) Int. Cl.: G01M 3/02, G08B 21/16, G08B 25/00

(54) **GAS LEAKAGE DETECTION METHOD AND GAS LEAKAGE DETECTION SYSTEM**

(30) Priority: 22.03.2024 JP 2024045970
(71) Applicant: MITSUBISHI HEAVY INDUSTRIES ENGINE & TURBOCHARGER, LTD., Sagamihara-shi, Kanagawa 252-5293 (JP)
(72) Inventor: UEDA, Hiroyuki, Tokyo 100-8332 (JP); IMAMORI, Yusuke, Tokyo 100-8332 (JP); TAKAHASHI, Tomohiro, Tokyo 100-8332 (JP); TANAKA, Takafumi, Sagamihara-shi, Kanagawa 252-5293 (JP); KOGURE, Ryosuke, Sagamihara-shi, Kanagawa 252-5293 (JP)
(74) Representative: Hoffmann Eitle
(86) International application number: PCT/JP2024/033193
(87) International publication number: WO 2025/197148

(57) **Abstract**

This gas leakage detection method comprises a temperature distribution acquisition step for acquiring, by means of an infrared camera, the temperature distribution of a detection area including a detection object inside which a gas containing ammonia exists; and a detection step for detecting leakage of the gas containing ammonia, based on the temperature distribution of the detection area obtained in the temperature distribution acquisition step.

## Description

### Technical Field

The present disclosure relates to a gas leakage detection method and a gas leakage detection system for detecting a leakage of a gas containing ammonia.

The present application claims the right of priority based on Japanese Patent Application No. 2024-045970 filed with the Japan Patent Office on March 22, 2024, the content of which is incorporated herein by reference.

### Background Art

PTL 1 discloses an invention for determining a leakage of a hydrogen gas by disposing a plurality of temperature measuring devices in the vicinity of a hydrogen gas-containing apparatus and sensing a temperature rise due to ignition of a leakage of the hydrogen gas from the hydrogen gas-containing apparatus with the temperature measuring devices.

### Citation List

### Patent Literature

[PTL 1] Japanese Unexamined Patent Application Publication No. 2003-242571

### Summary of Invention

### Technical Problem

In the invention described in PTL 1, in a case where the gas to be detected for the leakage is a gas containing ammonia having poor combustibility, there is a concern that it may be difficult to detect the leakage of the gas. In addition, in a case where the target for detecting the gas leak is piping or the like, there is a concern that it may be difficult to arrange a plurality of temperature measuring devices around the target.

In view of the above circumstances, an object of at least one embodiment of the present disclosure is to provide a gas leakage detection method and a gas leakage detection system capable of detecting a gas leak from a detection target object in which a gas containing ammonia having poor combustibility is present inside, even at a position away from the detection target object.

### Solution to Problem

A gas leakage detection method according to at least one embodiment of the present disclosure is a gas leakage detection method for detecting leakage of a gas containing ammonia, the gas leakage detection method including:
a temperature distribution acquisition step of acquiring, by an infrared camera, a temperature distribution of a detection area including a detection target object in which the gas is present inside; and
a detection step of detecting the leakage of the gas in consideration of the temperature distribution of the detection area obtained in the temperature distribution acquisition step.

A gas leakage detection system according to at least one embodiment of the present disclosure is a gas leakage detection system for detecting leakage of a gas containing ammonia, the gas leakage detection system including:
at least one infrared camera configured to acquire a temperature distribution of a detection area including a detection target object in which the gas is present inside; and
a detection device that detects the leakage of the gas in consideration of the temperature distribution of the detection area obtained by imaging the detection area with the at least one infrared camera.

### Advantageous Effects of Invention

According to at least one embodiment of the present disclosure, there are provided a gas leakage detection method and a gas leakage detection system capable of detecting a gas leak from a detection target object in which a gas containing ammonia having poor combustibility is present inside, even at a position away from the detection target object.

### Brief Description of Drawings

FIG. 1 is a schematic view of a gas leakage detection system according to one embodiment of the present disclosure.
FIG. 2 is an explanatory diagram for describing an example of a detection area in one embodiment of the present disclosure.
FIG. 3 is an explanatory diagram for describing information acquired by an infrared camera from a detection area in one embodiment of the present disclosure.
FIG. 4 is a flowchart of a gas leakage detection method according to one embodiment of the present disclosure.
FIG. 5 is an explanatory diagram for describing a method of calculating a volume of a leak region of the gas in one embodiment of the present disclosure.
FIG. 6 is a table for describing a relationship between a volume of a leak region, a temperature change, and a leak rate of the gas in one embodiment of the present disclosure.

### Description of Embodiments

Hereinafter, some embodiments of the present disclosure will be described with reference to the accompanying drawings. Dimensions, materials, shapes, relative disposition, and the like of components described as embodiments or illustrated in the drawings are not intended to limit the scope of the present disclosure, but are merely explanatory examples.

### (Gas Leakage Detection System)

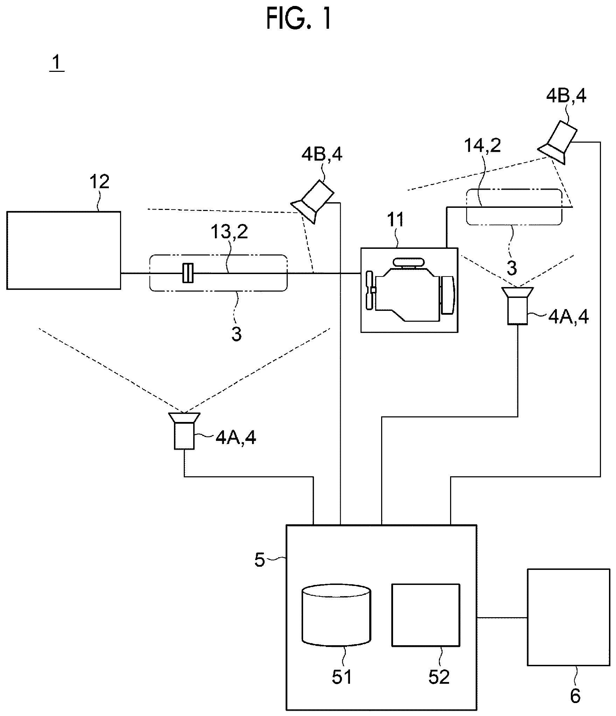

FIG. 1 is a schematic view of a gas leakage detection system 1 according to one embodiment of the present disclosure. A gas leakage detection system 1 and a gas leakage detection method according to some embodiments of the present disclosure are a system (method) for detecting a leakage of a gas containing ammonia. In the illustrated embodiment, the gas leakage detection system 1 includes at least one (in the illustrated example, a plurality of) infrared cameras 4, a detection device 5, and a notification device 6. The infrared camera 4 is configured to image a detection area 3 including a detection target object 2 in which a gas containing ammonia is present inside, and to acquire a temperature distribution of the imaged detection area 3.

FIG. 1 illustrates consumption equipment (for example, an engine) 11 for consuming a gas containing ammonia, a storage device (for example, a gas tank) 12 configured to store the gas containing ammonia, a gas introduction pipe 13 for guiding the gas containing ammonia from the storage device 12 to the consumption equipment 11, and a gas exhaust pipe 14 for discharging exhaust gas from the consumption equipment 11.

In the embodiment illustrated in FIG. 1, the gas introduction pipe 13 and the gas exhaust pipe 14 are each the detection target object 2, but only one of the gas introduction pipe 13 and the gas exhaust pipe 14 may be the detection target object 2. In addition, the consumption equipment 11 or the storage device 12 may be the detection target object 2, or two or more pieces of equipment or devices that are continuous in a flow direction of the gas, such as a combination of the storage device 12 and the gas introduction pipe 13, may be the detection target object 2.

### (Infrared Camera)

The same detection area 3 may be an imaging target of a plurality of infrared cameras 4 (4A and 4B). In the embodiment illustrated in FIG. 1, the detection area 3 including the gas introduction pipe 13 is an imaging target of two infrared cameras 4 (first infrared camera 4A and second infrared camera 4B). In addition, the detection area 3 including the gas exhaust pipe 14 is an imaging target of two infrared cameras 4 (first infrared camera 4A and second infrared camera 4B). It is preferable that the plurality of infrared cameras 4 that image the same detection area 3 as the imaging target are arranged to be able to image the detection area 3 from a plurality of directions.

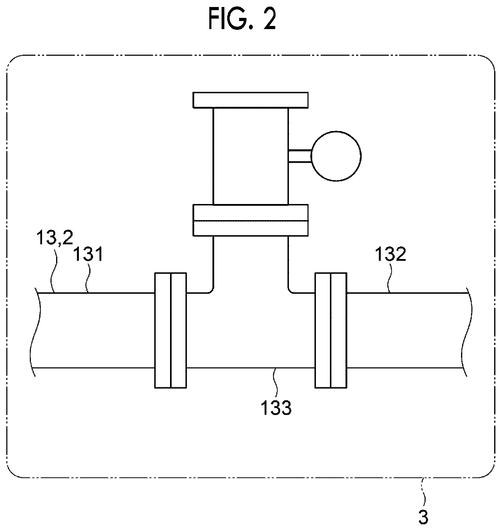

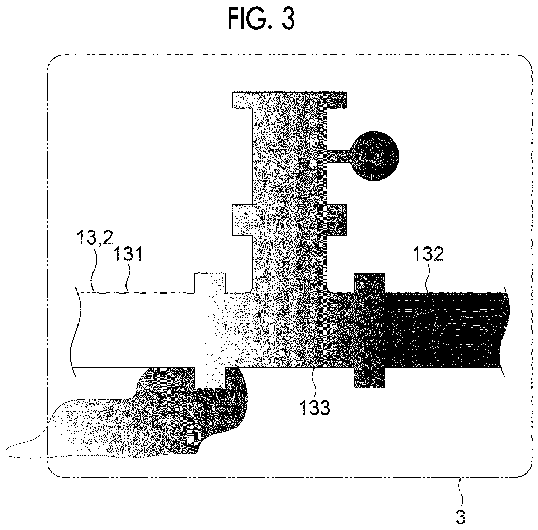

FIG. 2 is an explanatory diagram for describing an example of the detection area 3 in one embodiment of the present disclosure. FIG. 3 is an explanatory diagram for describing information acquired by the infrared camera 4 from the detection area 3 in one embodiment of the present disclosure. In the detection area 3 illustrated in FIG. 2, a first gas introduction pipe 131, a second gas introduction pipe 132, and a fitting 133 that connects the first gas introduction pipe 131 and the second gas introduction pipe 132 are shown. The infrared camera 4 acquires information indicating a temperature distribution in the detection area 3 as illustrated in FIG. 3 by imaging the detection area 3 illustrated in FIG. 2. The information indicating the temperature distribution in the detection area 3 includes information capable of generating a temperature image in the detection area 3. The information capable of generating the temperature image includes information on a temperature for each mapping area and information on a position in the captured image of the mapping area, the captured image of the detection area 3 being divided into a plurality of mapping areas in a predetermined area unit.

The detection device 5 is configured to receive information (signal) indicating the temperature distribution in the detection area 3 from the infrared camera 4 at every predetermined period. In a case where the infrared camera 4 is configured to generate the above-described temperature image, the detection device 5 may be configured to acquire image data of the temperature image from the infrared camera 4.

The detection device 5 is configured to detect the leakage of the gas in consideration of the temperature distribution of the detection area 3 obtained by imaging the detection area 3 with the infrared camera 4. The detection device 5 (controller) is an electronic control unit for detecting the leakage of the gas. The detection device 5 may be configured by an analog circuit that can be manufactured at a relatively low cost, or may be configured as a microcomputer including a CPU (processor) (not shown), a memory such as a ROM or a RAM, a storage device such as an external storage device, an I/O interface, a communication interface, and the like. In a case where the detection device 5 is configured by a microcomputer, the processor operates (performs calculation or the like) in accordance with an instruction of a program loaded in the memory, thereby realizing processing for detecting the leakage of the gas. The detection device 5 includes a storage unit 51 that stores information used for processing for detecting the leakage of the gas and information acquired from the infrared camera 4, and a processing execution unit 52 that realizes the processing for detecting the leakage of the gas.

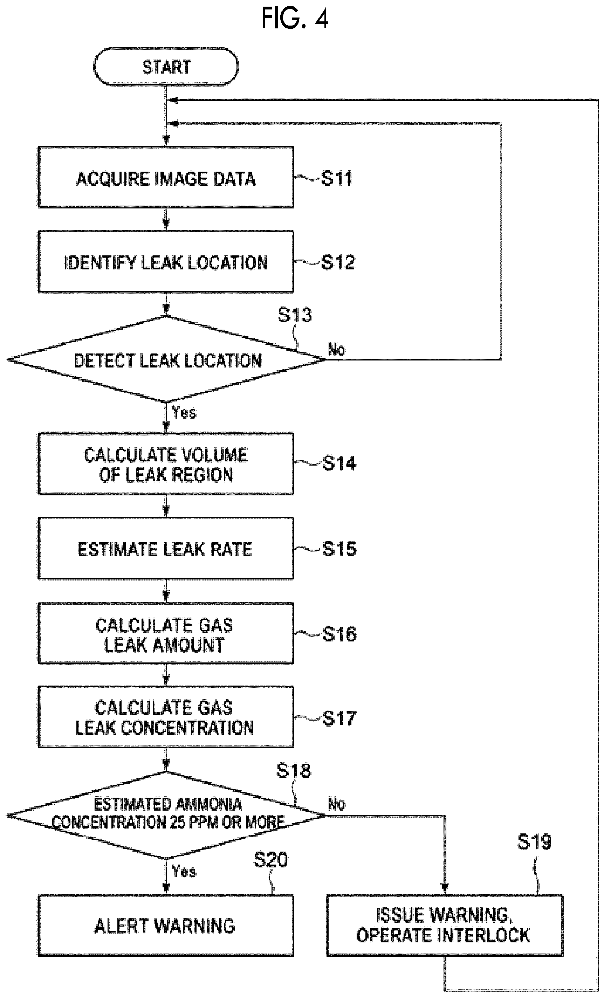

FIG. 4 is a flowchart of a gas leakage detection method according to an embodiment of the present disclosure. As shown in FIG. 4, the gas leakage detection method includes a temperature distribution acquisition step S11 and a detection step (leak location identification step) S12. In the temperature distribution acquisition step S11, the temperature distribution of the detection area 3 is acquired by the infrared camera 4. In the detection step S12, the leakage of the gas is detected in consideration of the temperature distribution of the detection area 3 obtained in the temperature distribution acquisition step S11. The detection step S12 and some steps S13 to S20 described later may be performed by the processing execution unit 52 of the detection device 5.

The temperature distribution of the detection area 3, specifically, the surface temperature of the detection target object 2, the ambient temperature around the detection target object 2, and the like can be acquired by the infrared camera 4. The infrared camera 4 can be arranged at a position away from the detection target object 2. When a gas leak occurs from the detection target object 2, a change occurs in the surface temperature of the detection target object 2 or the ambient temperature around the detection target object 2. Therefore, by considering the temperature distribution of the detection area 3, the leakage of the gas containing ammonia having poor combustibility can be detected. The present disclosure can be suitably applied to a case where the detection target object 2 is the storage device 12, the gas introduction pipe 13, or the gas exhaust pipe 14, and can detect the leakage of the gas containing ammonia from these detection target objects 2.

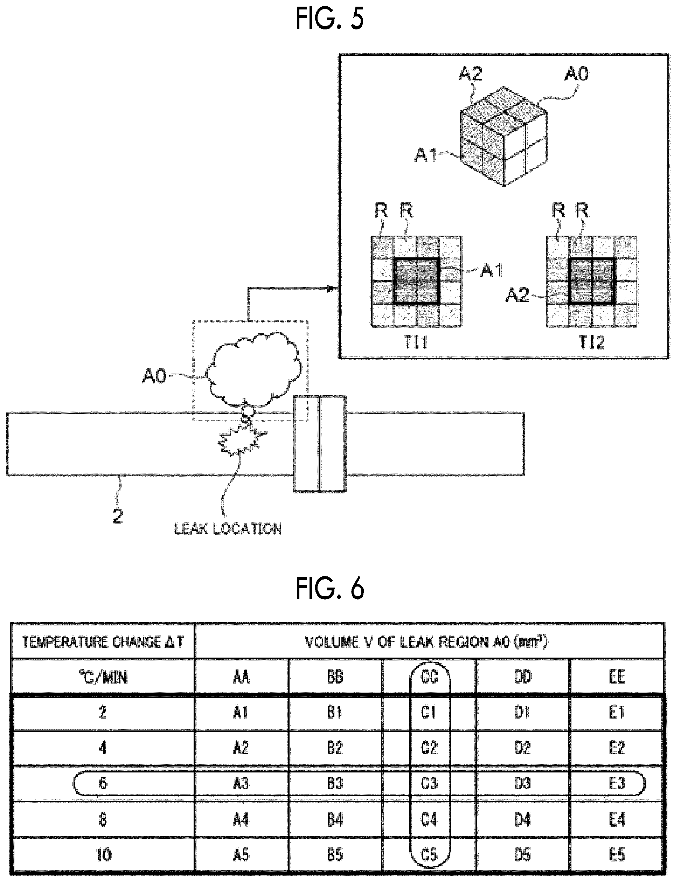

In some embodiments, in the above-described detection step S12, a temperature difference with respect to surrounding mapping areas (mapping areas arranged vertically, horizontally, or diagonally with respect to the mapping area as a determination target) for each mapping area is acquired by dividing a temperature distribution map (captured image) of the detection area 3 into a plurality of mapping areas (reference numeral R in FIG. 5) in a predetermined area unit, and in a case where there is a mapping area in which the temperature difference is larger than a threshold, it is determined that the leakage of the gas has occurred. In a certain embodiment, in a case where the temperature difference with respect to the surrounding mapping areas of the mapping area as the determination target is larger than a threshold (for example, 10°C), it is determined that the leakage of the gas has occurred. It is preferable that the determination of the leakage of the gas is performed for all the mapping areas included in the detection area 3.

In a case where the gas leak occurs from the detection target object 2, a change occurs in a surface temperature of the detection target object 2 or an ambient temperature around the detection target object 2. In a case where the temperature difference with respect to the surroundings is larger than the threshold, it can be determined that the leakage of the gas has occurred.

In some embodiments, the above-described temperature distribution acquisition step S11 includes a first temperature distribution acquisition step and a second temperature distribution acquisition step. In the first temperature distribution acquisition step, the temperature distribution of the detection area 3 is acquired by the first infrared camera 4A. In the second temperature distribution acquisition step, the temperature distribution of the same detection area 3 as the first infrared camera 4A is acquired by the second infrared camera 4B of which the imaging direction intersects the imaging direction of the first infrared camera 4A.

In a certain embodiment, the first infrared camera 4A is disposed at a position where information capable of creating a horizontal plane image as a temperature distribution map can be acquired, and the second infrared camera 4B is disposed at a position where information capable of creating a vertical plane image as a temperature distribution map can be acquired. The imaging direction of the first infrared camera 4A is a direction along the vertical direction, and the imaging direction of the second infrared camera 4B is a direction along the horizontal direction.

In the detection step S12 described above, the leakage of the gas is detected in consideration of both the temperature distribution of the detection area 3 obtained in the first temperature distribution acquisition step and the temperature distribution of the detection area 3 obtained in the second temperature distribution acquisition step. For example, the temperature difference for each mapping area may be calculated from the information acquired by the first infrared camera 4A, and the calculated temperature difference may be used for determining the leakage of the gas, and the temperature difference for each mapping area may be calculated from the information acquired by the second infrared camera 4B, and the calculated temperature difference may be used for determining the leakage of the gas.

The temperature distribution of the same detection area 3 from two directions can be acquired by the first infrared camera 4A and the second infrared camera 4B. By considering the temperature distribution of the same detection area 3 from two directions, the leakage of the gas can be detected with higher accuracy.

### (Identification of Leak Location of Gas)

In the gas leakage detection method according to some embodiments, the detection step S12 described above includes a leak location identification step of identifying a leak location of the gas based on both the temperature distribution of the detection area 3 obtained in the first temperature distribution acquisition step described above and the temperature distribution of the detection area 3 obtained in the second temperature distribution acquisition step described above. In the embodiment shown in FIG. 4, in a case where the leak location of the gas can be identified in the leak location identification step (Yes in step S13), a volume calculation step S14 described later is performed. In a case where the leak location of the gas cannot be identified in the leak location identification step (No in step S13), the temperature distribution acquisition step S11 and the leak location identification step described above are repeatedly performed until the leak location of the gas can be identified in the leak location identification step.

The temperature distribution of the same detection area 3 from two directions can be acquired by the first infrared camera 4A and the second infrared camera 4B. Then, a portion where the temperature difference is relatively large in the same detection area 3 can be identified as the leak location of the gas.

### (Estimation of Gas Leakage Concentration)

FIG. 5 is an explanatory diagram for describing a method of calculating a volume of a leak region of the gas in one embodiment of the present disclosure. FIG. 6 is a table for describing a relationship between a volume of a leak region, a temperature change, and a leak rate of the gas in one embodiment of the present disclosure. The gas leakage detection method according to some embodiments includes a volume calculation step S14 of calculating a volume of a leak region of the gas based on both the temperature distribution of the detection area 3 obtained in the first temperature distribution acquisition step described above and the temperature distribution of the detection area 3 obtained in the second temperature distribution acquisition step described above.

Specifically, in the volume calculation step S14, as shown in FIG. 5, among a plurality of mapping areas R in the horizontal plane image (temperature distribution map) TI1 acquired by the first infrared camera 4A, a region (region larger than a threshold) in which the above-described temperature difference is relatively large is identified as a leak region of the gas A1 in the horizontal plane image TI1. Among the plurality of mapping areas R in the vertical plane image (temperature distribution map) TI2 acquired by the second infrared camera 4B, a region (region larger than a threshold) in which the above-described temperature difference is relatively large is identified as a leak region of the gas A2 in the vertical plane image TI2. A volume of a block body configured by the gas leak region A1 and the gas leak region A2 is calculated as a volume V of the leak region A0 of the gas.

The gas leakage detection method according to some embodiments further includes a leak rate of the gas estimation step S15 of estimating a leak rate of the gas m in the leak region A0 from a temperature change ΔT of the leak region A0 and the volume V of the leak region A0 calculated in the volume calculation step S14 based on association information (for example, see FIG. 6) in which the volume V of the leak region A0, the temperature change ΔT, and the leak rate of the gas m are associated with each other. The above-described association information is stored in the storage unit 51 in advance, and the processing execution unit 52 refers to the association information stored in the storage unit 51.

The above-described association information indicates a correspondence relationship between the volume V of the leak region A0, the temperature change ΔT, and the leak rate of the gas m, and may be any information as long as the leak rate of the gas m of the leak region A0 corresponding to the input information can be acquired as the output information when the volume V and the temperature change ΔT of the leak region A0 are used as the input information. The above-described association information includes not only the table shown in FIG. 6 but also a list, a map, a function, a machine learning model, a strength analysis model, and the like indicating a correspondence relationship between the input information and the output information. The above-described association information may be created based on numerical analysis results.

Specifically, a certain time is defined as t0, a time after a predetermined period (unit time, for example, 1 second) has elapsed from the time t0 is defined as t1, and a time after a predetermined period (unit time, for example, 1 second) has elapsed from the time t1 is defined as t2. A volume of the leak region A0 of the gas at the time t0 is defined as V0, and a temperature of the leak region A0 at the time t0 is defined as T0. Similarly, a volume of the leak region A0 of the gas at the time t1 is defined as V1, a temperature of the leak region A0 at the time t1 is defined as T1, a volume of the leak region A0 of the gas at the time t2 is defined as V2, and a temperature of the leak region A0 at the time t2 is defined as T2. A temperature change ΔT1 in a period from the time t0 to the time t1 can be calculated by T1 - T0. A temperature change ΔT2 in a period from the time t1 to the time t2 can be calculated by T2 - T1. The above-described unit time may be 10 seconds or 1 minute.

The volume V (V0, V1, V2) of the leak region A0 is calculated by the volume calculation step S14. The temperature T (T0, T1, T2) of the leak region A0 is an average value of the temperatures of the leak region A0 acquired by the infrared camera 4. The temperature T of the leak region A0 may be acquired from the temperature distribution map such as the horizontal plane image TI1 or the vertical plane image TI2 described above. The temperature T (T0, T1, T2) of the leak region A0 may be an average value of the temperatures of the leak region A1 acquired by the first infrared camera 4A, an average value of the temperatures of the leak region A2 acquired by the second infrared camera 4B, or an average value of the temperature of the leak region A1 acquired by the first infrared camera 4A and the temperature of the leak region A2 acquired by the second infrared camera 4B.

The leak rate of the gas m1 (m) at the time t1 can be estimated from the volume V1 and the temperature change ΔT1 based on the above-described association information. The leak rate of the gas m2 (m) at the time t2 can be estimated from the volume V2 and the temperature change ΔT2 based on the above-described association information. In the example shown in FIG. 6, in a case where the volume V of the leak region A0 is CC and the temperature change ΔT of the leak region A0 is 6 °C/min, C3 corresponding to the volume V and the temperature change ΔT is obtained as the leak rate of the gas m. In a case of estimating the leak rate of the gas m at a certain time, a volume one unit time before the time may be used instead of the volume at the time.

The temperature distribution of the detection area 3 from two directions can be acquired by the first infrared camera 4A and the second infrared camera 4B. Then, a region in which the above-described temperature difference is relatively large in the detection area 3 can be set as the leak region A0 of the gas, and the volume V of the leak region A0 of the gas can be calculated. By using the relationship between the volume V of the leak region A0, the temperature change ΔT, and the leak rate of the gas m, the leak rate of the gas m in the leak region A0 can be estimated with higher accuracy from the volume V and the temperature change ΔT of the leak region A0.

The gas leakage detection method according to some embodiments includes gas concentration estimation steps S16, S17 of estimating a concentration of the gas in the space including the detection area 3 based on a temperature change time of the leak region A0, the leak rate of the gas m in the leak region estimated in the leak rate of the gas estimation step S15, and a spatial volume of the space including the detection area 3. The gas leak amount M can be calculated from the temperature change time of the leak region A0 and the leak rate of the gas m in the leak region A0 estimated in the leak rate of the gas estimation step S15 (step S16). Then, the concentration of the gas in the space can be calculated from the calculated gas leak amount M and the spatial volume of the space including the detection area 3 (step S17).

The gas leak amount M can be calculated by integrating the gas leak amount per unit time. Specifically, the gas leak amount M1 (M) at the time t1 can be calculated by multiplying the leak rate of the gas m1 at the time t1 by the predetermined time (temperature change time). The gas leak amount M2 (M) at the time t2 can be calculated by adding the gas leak amount M1 at the time t1 to a value obtained by multiplying the leak rate of the gas m2 at the time t2 by the predetermined time (temperature change time). The concentration of the gas in the space at the time t1 can be calculated by dividing the gas leak amount M1 by the spatial volume of the space. The concentration of the gas in the space at the time t2 can be calculated by dividing the gas leak amount M2 by the spatial volume of the space.

The gas leak amount can be estimated from the leak rate of the gas m and the temperature change time in the leak region A0, and the concentration of the gas in the space can be estimated with higher accuracy from the estimated gas leak amount and the spatial volume of the space including the detection area 3. By estimating the concentration of the gas in the space, it is possible to take an appropriate countermeasure against the gas leak.

The gas leakage detection method according to some embodiments includes notification steps S18, S19, and S20 of performing a notification different from a notification in a case where the concentration of the gas in the space estimated in the above-described gas concentration estimation steps S16 and S17 is less than a predetermined concentration (for example, 25 ppm in the illustrated example) by the notification device 6 in a case where the concentration of the gas in the space is equal to or higher than the predetermined concentration. The notification device 6 may be a display device capable of displaying visualized information such as a display, or may be an acoustic device capable of generating a notification sound such as a voice or a warning sound such as a speaker. In a certain embodiment, in a case where the concentration of the gas in the space is less than the predetermined concentration (in step S18, "No"), an alert warning is issued (step S19). In a case where the concentration of the gas in the space is equal to or higher than the predetermined concentration (in step S18, "Yes"), a warning is issued (step S20). In a case where the concentration of the gas in the space is equal to or higher than the predetermined concentration (in step S18, "Yes"), an interlock (safety device) such as stopping the consumption equipment 11 may be operated. In the illustrated embodiment, after the alert warning is issued (step S19), the above-described steps S11 to S18 are repeated until the above-described step S18 becomes "Yes".

In the present specification, expressions representing relative or absolute dispositions such as "in a certain direction", "along a certain direction", "parallel", "orthogonal", "center", "concentric", or "coaxial" are intended not only to strictly represent such dispositions but also to encompass states in which, within tolerances or to an extent that the same function can be obtained, there is relative displacement in angle or distance.

For example, expressions such as "identical", "equal", and "homogeneous", which indicate that things are in the same state, not only represent a state of being strictly equal, but also represent a state in which there is a difference within a tolerance, or to an extent that the same function can be obtained.

In addition, in the present specification, an expression of a shape such as a rectangular shape or a cylindrical shape indicates not only the shape such as the rectangular shape or the cylindrical shape in a geometrically strict sense, but also a shape including an uneven portion or a chamfered portion within the range in which the same effect can be achieved.

Moreover, in the present specification, expressions such as that one component "comprises", "includes", or "has" another component are non-exclusive and do not exclude the presence of other components.

The present disclosure is not limited to the embodiment described above, and includes modified forms of the embodiment described above or forms obtained by combining the modified forms with each other as appropriate.

Contents described in some embodiments described above are understood as follows, for example.

1) A gas leakage detection method according to at least one embodiment of the present disclosure is a gas leakage detection method for detecting leakage of a gas containing ammonia, the gas leakage detection method including:
   a temperature distribution acquisition step (S11) of acquiring, by an infrared camera (4), a temperature distribution of a detection area (3) including a detection target object (2) in which the gas is present inside; and
   a detection step (S12) of detecting the leakage of the gas in consideration of the temperature distribution of the detection area (3) obtained in the temperature distribution acquisition step (S11).

According to the method of 1), the temperature distribution of the detection area (3), specifically, the surface temperature of the detection target object (2), the ambient temperature around the detection target object (2), and the like can be acquired by the infrared camera (4). The infrared camera (4) can be arranged at a position away from the detection target object (2). In a case where a gas leak occurs from the detection target object (2), a change occurs in the surface temperature of the detection target object (2) or the ambient temperature around the detection target object (2). Therefore, by considering the temperature distribution of the detection area (3), the leakage of the gas containing ammonia having poor combustibility can be detected.

2) In some embodiments, in the gas leakage detection method according to 1),
the detection step (S12) includes
dividing a temperature image showing the temperature distribution of the detection area into a plurality of mapping areas each having a predetermined area;
acquiring a temperature difference of each mapping area with respect to surrounding mapping areas; and
determining that the leakage of the gas has occurred when the temperature difference is greater than a threshold.

According to the method of 2), in a case where a gas leak occurs from the detection target object (2), a change occurs in the surface temperature of the detection target object (2) or the ambient temperature around the detection target object (2). In a case where the temperature difference is larger than the threshold, it can be determined that the leakage of the gas has occurred.

3) In some embodiments, in the gas leakage detection method according to 1) or 2),
the temperature distribution acquisition step (S11)
includes a first temperature distribution acquisition step of acquiring the temperature distribution of the detection area (3) by a first infrared camera (4A), and
a second temperature distribution acquisition step of acquiring the temperature distribution of the detection area (3) by a second infrared camera (4B) having an imaging direction intersecting the imaging direction of the first infrared camera (4A), and
in the detection step, the leakage of the gas is detected in consideration of both the temperature distribution of the detection area (3) obtained in the first temperature distribution acquisition step and the temperature distribution of the detection area (3) obtained in the second temperature distribution acquisition step.

According to the method of 3), the temperature distribution of the detection area (3) from two directions can be acquired by the first infrared camera (4A) and the second infrared camera (4B). By considering the temperature distribution of the detection area (3) from two directions, the leakage of the gas can be detected with higher accuracy.

4) In some embodiments, in the gas leakage detection method according to 3),
the detection step (S12)
includes a leak location identification step of identifying a leak location of the gas based on both the temperature distribution of the detection area (3) obtained in the first temperature distribution acquisition step and the temperature distribution of the detection area (3) obtained in the second temperature distribution acquisition step.

According to the method of 4), the temperature distribution of the same detection area (3) from two directions can be acquired by the first infrared camera (4A) and the second infrared camera (4B). Then, a portion in which the temperature difference with respect to the surroundings is relatively large in the same detection area (3) can be identified as the leak location of the gas.

5) In some embodiments, the gas leakage detection method according to 3) or 4) further includes
a volume calculation step (S14) of calculating a volume (V) of a leak region of the gas (A0) based on both the temperature distribution of the detection area obtained in the first temperature distribution acquisition step and the temperature distribution of the detection area obtained in the second temperature distribution acquisition step, and
a leak rate of the gas estimation step (S15) of estimating, based on association information in which the volume (V) of the leak region (A0), the temperature change (ΔT), and the leak rate of the gas (m) are associated with each other, a leak rate of the gas (m) in the leak region from a temperature change (ΔT) of the leak region (A0) and the volume (V) of the leak region (A0) calculated in the volume calculation step (S14).

According to the method of 5), the temperature distribution of the detection area (3) from two directions can be acquired by the first infrared camera (4A) and the second infrared camera (4B). Then, a region in which the temperature difference with respect to the surroundings is relatively large in the detection area (3) can be set as the gas leak region (A0), and the volume (V) of the gas leak region (A0) can be calculated. By using the relationship between the volume (V) of the leak region (A0), the temperature change (ΔT), and the leak rate of the gas (m), the leak rate of the gas (m) in the leak region (A0) can be estimated with higher accuracy from the volume (V) and the temperature change (ΔT) of the leak region (A0).

6) In some embodiments, the gas leakage detection method according to 5) further includes
a gas concentration estimation step (S16, S17) of estimating a concentration of the gas in a space including the detection area (3) based on a temperature change time of the leak region (A0), the leak rate of the gas (m) in the leak region (A0) estimated in the leak rate of the gas estimation step (S15), and a spatial volume of the space.

According to the method of 6), the gas leak amount (M) can be estimated from the leak rate of the gas (m) and the temperature change time in the leak region (A0), and the concentration of the gas in the space can be estimated with higher accuracy from the estimated gas leak amount (M) and the spatial volume of the space including the detection area (3). By estimating the concentration of the gas in the space, it is possible to take an appropriate countermeasure against the gas leak.

7) In some embodiments, the gas leakage detection method according to 6) further includes
a notification step (S18, S19, S20) of, in a case where the concentration of the gas in the space estimated in the gas concentration estimation step (S16, S17) is equal to or higher than a predetermined concentration, providing, by a notification device (6), a notification different from a notification provided in a case where the concentration of the gas in the space is less than the predetermined concentration.

According to the method of 7), since the notification device (6) performs the notification according to the concentration of the gas in the space, it is possible to prompt a person who receives the notification to take an appropriate action according to the concentration of the gas in the space.

8) In some embodiments, in the gas leakage detection method according to any one of 1) to 7),
the detection target object (2) includes a gas introduction pipe (13) for guiding the gas to consumption equipment (11) for consuming the gas.

According to the method of 8), even in a case where the detection target object (2) includes the gas introduction pipe (13), the leakage of the gas from the gas introduction pipe (13) can be detected with higher accuracy by considering the temporal change in the temperature distribution of the detection area (3).

9) In some embodiments, in the gas leakage detection method according to any one of 1) to 7),
the detection target object (2) includes a gas exhaust pipe (14) for discharging exhaust gas from consumption equipment (11) for consuming the gas.

According to the method of 9), even in a case where the detection target object (2) includes the gas exhaust pipe (14), the leakage of the gas from the gas exhaust pipe (14) can be detected with higher accuracy by considering the temporal change in the temperature distribution of the detection area (3).

10) A gas leakage detection system (1) according to at least one embodiment of the present disclosure is a gas leakage detection system (1) for detecting leakage of a gas containing ammonia, the gas leakage detection system (1) including:
at least one infrared camera (4) configured to acquire a temperature distribution of a detection area (3) including a detection target object (2) in which the gas is present inside; and
a detection device (5) that detects the leakage of the gas in consideration of the temperature distribution of the detection area (3) obtained by imaging the detection area (3) with the at least one infrared camera (4).

According to the configuration of 10), the temperature distribution of the detection area (3), specifically, the surface temperature of the detection target object (2), the ambient temperature around the detection target object (2), and the like can be acquired by the infrared camera (4). The infrared camera (4) can be arranged at a position away from the detection target object (2). When a gas leak occurs from the detection target object (2), a change occurs in the surface temperature of the detection target object (2) or the ambient temperature around the detection target object (2). Therefore, the detection device (5) can detect the leakage of the gas containing ammonia having poor combustibility by considering the temperature distribution of the detection area (3).

### Reference Signs List

1 gas leakage detection system
2 detection target object
3 detection area
4: infrared camera
4A first infrared camera
4B second infrared camera
5 detection device
6: notification device

## Claims

1. A gas leakage detection method for detecting leakage of a gas containing ammonia, the gas leakage detection method comprising:
a temperature distribution acquisition step of acquiring, by an infrared camera, a temperature distribution of a detection area including a detection target object in which the gas is present inside; and
a detection step of detecting the leakage of the gas in consideration of the temperature distribution of the detection area obtained in the temperature distribution acquisition step.

2. The gas leakage detection method according to Claim 1,
wherein, the detection step includes
dividing a temperature image showing the temperature distribution of the detection area into a plurality of mapping areas each having a predetermined area;
acquiring a temperature difference of each mapping area with respect to surrounding mapping areas; and
determining that the leakage of the gas has occurred when the temperature difference is greater than a threshold.

3. The gas leakage detection method according to Claim 1 or 2,
wherein the temperature distribution acquisition step
includes a first temperature distribution acquisition step of acquiring the temperature distribution of the detection area by a first infrared camera, and
a second temperature distribution acquisition step of acquiring the temperature distribution of the detection area by a second infrared camera having an imaging direction intersecting the imaging direction of the first infrared camera, and
in the detection step, the leakage of the gas is detected in consideration of both the temperature distribution of the detection area obtained in the first temperature distribution acquisition step and the temperature distribution of the detection area obtained in the second temperature distribution acquisition step.

4. The gas leakage detection method according to Claim 3,
wherein the detection step includes
a leak location identification step of identifying a leak location of the gas based on both the temperature distribution of the detection area obtained in the first temperature distribution acquisition step and the temperature distribution of the detection area obtained in the second temperature distribution acquisition step.

5. The gas leakage detection method according to Claim 3, further comprising:
a volume calculation step of calculating a volume of a leak region of the gas based on both the temperature distribution of the detection area obtained in the first temperature distribution acquisition step and the temperature distribution of the detection area obtained in the second temperature distribution acquisition step; and
a leak rate of the gas estimation step of estimating, based on association information in which the volume of the leak region, the temperature change, and the leak rate of the gas are associated with each other, a leak rate of the gas in the leak region from a temperature change of the leak region and the volume of the leak region calculated in the volume calculation step.

6. The gas leakage detection method according to Claim 5, further comprising:
a gas concentration estimation step of estimating a concentration of the gas in a space including the detection area based on a temperature change time of the leak region, the leak rate of the gas in the leak region estimated in the leak rate of the gas estimation step, and a spatial volume of the space.

7. The gas leakage detection method according to Claim 6, further comprising:
a notification step of, in a case where the concentration of the gas in the space estimated in the gas concentration estimation step is equal to or higher than a predetermined concentration, providing, by a notification device, a notification different from a notification provided in a case where the concentration of the gas in the space is less than the predetermined concentration.

8. The gas leakage detection method according to Claim 1 or 2,
wherein the detection target object includes a gas introduction pipe for guiding the gas to consumption equipment for consuming the gas.

9. The gas leakage detection method according to Claim 1 or 2,
wherein the detection target object includes a gas exhaust pipe for discharging exhaust gas from consumption equipment for consuming the gas.

10. A gas leakage detection system for detecting leakage of a gas containing ammonia, the gas leakage detection system comprising:
at least one infrared camera configured to acquire a temperature distribution of a detection area including a detection target object in which the gas is present inside; and
a detection device that detects the leakage of the gas in consideration of the temperature distribution of the detection area obtained by imaging the detection area with the at least one infrared camera.
